# EUROPÄISCHE PATENTSCHRIFT

(11) **EP 1 445 529 B1**
(45) Veröffentlichungstag und Bekanntmachung des Hinweises auf die Patenterteilung: **26.04.2006**
(21) Anmeldenummer: 03002425.1
(22) Anmeldetag: 05.02.2003
(51) Int. Cl.: F16L 41/08

(54) **Verbindungsanordnung für Kältemittelleitungen**
Connection device for refrigerant conduits
Dispositif de raccordement pour conduites de réfrigérant

(43) Veröffentlichungstag der Anmeldung: 11.08.2004
(73) Patentinhaber: ContiTech Kühner GmbH & Cie. KG, 71570 Oppenweiler (DE)
(72) Erfinder: Wildermuth, Andreas, 71672 Marbach (DE); Eismann, Mike, 71739 Oberriexingen (DE)
(74) Vertreter: Finger, Karsten

(56) Entgegenhaltungen:
- US-A- 5 271 460
- US-A- 5 853 201
- US-B1- 6 386 593
- US-B1- 6 431 614

## Beschreibung

Die Erfindung betrifft eine Verbindungsanordnung für Kältemittelleitungen nach dem Oberbegriff des Anspruchs 1.

Aus der DE 299 08 541 U1 ist eine derartige Verbindungsanordnung für Kältemittelleitungen, insbesondere für mit CO₂ betriebene Kraftfahrzeugklimaanlagen, bekannt, bei der die Leitungsendstücke zweier Kühlmittelleitungen mit je einem Kupplungsstück versehen sind. Beide Kupplungsstücke weisen jeweils auf der zum anderen Kupplungsstück weisenden Seite eine radial verlaufende Dichtfläche auf, wobei zwischen diesen Dichtflächen ein metallischer Flachring mit einer umlaufenden Sicke eingesetzt ist. Der mit einer umlaufenden Sicke versehene metallische Flachring wird durch eine Verschraubung der beiden Kupplungsstücke zusammengedrückt und sorgt so für die notwenige Axialabdichtung der Verbindungsanordnung. Die Verschraubung der beiden Kupplungsteile erfolgt dadurch, dass ein Kupplungsstück mit einem Aussengewinde versehen ist, auf das eine mit dem zweiten Kupplungsstück verbundene Überwurfmutter geschraubt wird. Oder die Kupplungsstücke werden mittels Schrauben miteinander verbunden, wobei die Schrauben kreisförmig bzw. mehrseitig um und parallel zur Achse der innerhalb der Kupplungsstücke verbundenen Leitungsendstücken angeordnet sind.

Nachteilig bei einer derartigen Verbindungsanordnung ist, dass deren Montage oder Demontage sehr aufwendig ist, wenn hierfür nur ein begrenzter Raum zur Verfügung steht.

Aus der US 6 386 593 B 1 ist ebenfalls eine Verbindungsanordnung aus einem dicht mit einem ersten Leitungsendstück verbindbaren ersten Kupplungsstück und einem dicht mit einem zweiten Leitungsendstück verbindbaren zweiten Kupplungsstück bekannt, wobei beide Kupplungsstücke durch eine einzige dezentral angeordnete Schraube derart zusammengefügt sind, dass die Leitungsendstücke über je eine Bohrung in den Kupplungsstücken miteinander verbindbar sind. Beide Kupplungsstücke weisen auf der zum anderen Kupplungsstück weisenden Seite eine Dichtfläche auf, die der Trennfugenfläche der Verbindungsanordnung entspricht. Zwischen den Dichtflächen ist eine großflächige Flachdichtung angeordnet. Die Flachdichtung ist auf der vom Zentrum der Verbindungsanordnung abgewandten Seite der Schraube und im Abstand von der Schraube derart doppelt gefaltet, dass beim Verschrauben der Kupplungsstücke eine Hebelwirkung entsteht, die zum gleichmäßigem Zusammenpressen der Flachdichtung zwischen den Dichtflächen der Kupplungsstücke führt, wobei der gefaltete Teil der Flachdichtung komprimiert wird.

Eine derartige Verbindungsanordnung ist nicht geeignet, hohe Innendrücke, wie sie insbesondere in Kältemittelleitungen auftreten, aufzunehmen.

Der Erfindung liegt die Aufgabe zugrunde, eine Verbindungsanordnung der eingangs genannten Art mit möglichst einfachen Mitteln so auszubilden, dass eine einfache Montage oder Demontage der Verbindungsanordnung auch in engen Räumen möglich ist, wobei weiterhin eine hohe Dichtheit der Verbindungsanordnung bei Drücken bis 145 bar und bei Temperaturen bis 180 DEG gewährleistet ist.

Diese Aufgabe wird bei einer Verbindungsanordnung der eingangs genannten Art mit den Merkmalen des kennzeichnenden Teils des Anspruchs 1 gelöst. Weiterbildungen und vorteilhafte Ausgestaltungen der Erfindung ergeben sich aus den Unteransprüchen

Die erfindungsgemäße Verbindungsanordnung umfasst ein dicht mit einem ersten Leitungsendstück verbindbares erstes Kupplungsstück und ein dicht mit einem zweiten Leitungsendstück verbindbares zweites Kupplungsstück. Die Verbindung zwischen Kupplungsstück und Leitungsendstück ist vorzugsweise unlösbar, wobei das Kupplungsstück vorzugsweise eine Bohrung aufweist, in die das Leitungsendstück eingefügt ist. Die Bohrung hat gleichzeitig die Funktion eines Verbindungskanals. Beide Kupplungsstücke sind mittels einer einzigen Schraube miteinander verschraubt, wodurch die Leitungsendstücke über die Bohrungen miteinander verbindbar sind. Beide Kupplungsstücke weisen jeweils auf der zum anderen Kupplungsstück weisenden Seite eine radial verlaufende Dichtfläche auf, wobei zwischen diesen Dichtflächen ein Dichtring angeordnet ist. Die genannte einzige Schraube ist seitlich von diesen Dichtflächen versetzt angeordnet. Zwischen den Kupplungsstücken ist ein nicht komprimierbarer Formkörper als Abstandhalter angeordnet, wobei der Formkörper im Abstand von der Schraube auf derjenigen Seite der Schraube vorgesehen ist, die den Dichtflächen der Kupplungsstücke abgewandt ist. Der Formkörper ist derart ausgebildet, dass beim Verschrauben der Kupplungsstücke eine Hebelwirkung entsteht, die zum gleichmäßigen Zusammenpressen des Dichtringes zwischen den Dichtflächen der Kupplungsstücke führt.

Es hat sich gezeigt, dass durch diesen überraschend einfachen Aufbau der Verbindungsanordnung eine einfache Montage oder Demontage der Verbindungsanordnung auch auf engsten Räumen möglich ist, weil das einzige zu betätigende Befestigungsmittel, nämlich die Schraube, allein von einer Seite her zugänglich ist, wodurch die erfindungsgemäße Verbindungsanordnung montagefreundlich ist. Gleichzeitig ist eine hohe Dichtheit der Verbindungsanordnung bei Drücken bis 145 bar und bei Temperaturen bis 180 DEG gewährleistet. Dies gilt insbesondere bei Verwendung des in der Fachwelt bekannten Kältemittels R 744. Die Erfindung zeichnet sich insbesondere dadurch aus, dass die Krafteinleitung beim Zusammenfügen der Kupplungsstücke exzentrisch durch nur eine einzige Schraube erfolgt, wobei durch den in den Zwischenraum der Kupplungsstücke eingefügten nicht komprimierbaren Abstandhalter eine Hebelwirkung erreicht wird, die zu einem starken Zusammenpressen des Dichtringes führt. Dadurch wird die Dichtheit der Verbindungsanordnung gewährleistet. Vorzugsweise ist wenigstens ein Kupplungsstück bereits so geformt, dass der nicht komprimierbare Formkörper als stoffschlüssiger Bestandteil des Kupplungsstücks ausgebildet ist. Insbesondere kann hierzu der nicht komprimierbare Formkörper einstückig mit dem Kupplungsstück ausgebildet sein.

Eine vorteilhafte Ausgestaltung der Erfindung sieht vor, dass der Dichtring ein metallischer Flachring mit umlaufender Sicke ist. Ein derartiger Flachring lässt sich vorteilhaft beim Verschrauben der erfindungsgemäßen Verbindungsanordnung zusammenpressen und ist hierbei besonders dicht und beständig gegenüber unter- oder überkritischem CO₂. Ein derartiger metallischer Flachring ist insbesondere dicht und beständig gegenüber dem Kältemittel R 744 und so genannten PAG-Ölen. Bei herkömmlichen Verbindungsanordnungen ist die Verwendung von metallischen Flachringen als Dichtringe nicht ohne weiteres möglich. Insbesondere muss sehr viel Kraft zum Zusammenpressen der Flachringe aufgewendet werden, um eine absolute Dichtheit zu erreichen. Bei der erfindungsgemäßen Verbindungsanordnung ist ein derartiges Zusammenpressen wegen der Hebelwirkung aber vereinfacht und auf engstem Raum möglich.

Erfindungsgemäß ist der Dichtring in einer flachen Kunststoffkappe eingelegt ist, die zwischen den Dichtflächen angeordnet ist, wobei die Kunststoffkappe sowie das erste und/oder das zweite Kupplungsstück derart ausgebildet sind, dass die Kunststoffkappe noch vor der Verschraubung der Kupplungsstücke einfach zwischen den Dichtflächen befestigbar, z.B. aufklipsbar, ist. Eine derartige Kunststoffkappe dient als Verliersicherung des Dichtringes, da der Dichtring vor der Verschraubung noch nicht fixiert ist. Durch die Kunststoffkappe wird außerdem eine Zentrierung des Dichtringes auf den Dichtflächen erreicht. Vorzugsweise weist das erste oder das zweite Kupplungsstück im äußeren Bereich der Dichtfläche wenigstens einen radial nach außen gerichteten, vorzugsweise umlaufenden Vorsprung auf, auf dem die entsprechend ausgebildete Kunststoffkappe lösbar befestigbar, insbesondere aufklipsbar ist.

Die dicht mit den Kupplungsstücken verbundenen Leitungsendstücke sind entsprechend einer Weiterbildung der Erfindung miteinander fluchtend angeordnet.

Es ist aber auch zweckmäßig, die Leitungsendstücke winklig, vorzugsweise im rechten Winkel zueinander anzuordnen. Eine derart ausgebildete Verbindungsanordnung ist vorteilhaft in sehr engen Räumen einsetzbar.

Nachfolgend wird die Erfindung anhand von Ausführungsbeispielen erläutert, die in der Zeichnung dargestellt sind. In dieser zeigen:
- Fig. 1: eine schematische Querschnittsdarstellung der erfindungsgemäßen Verbindungsanordnung in Aufsicht,
- Fig. 2: eine schematische Querschnittsdarstellung der erfindungsgemäßen Verbindungsanordnung in Seitenansicht,
- Fig. 3: eine schematische perspektivische Darstellung der erfindungsgemäßen Verbindungsanordnung mit fluchtenden Leitungsendstücken und
- Fig. 4: eine schematische perspektivische Darstellung der erfindungsgemäßen Verbindungsanordnung mit im rechten Winkel zueinander angeordneten Leitungsendstücken.

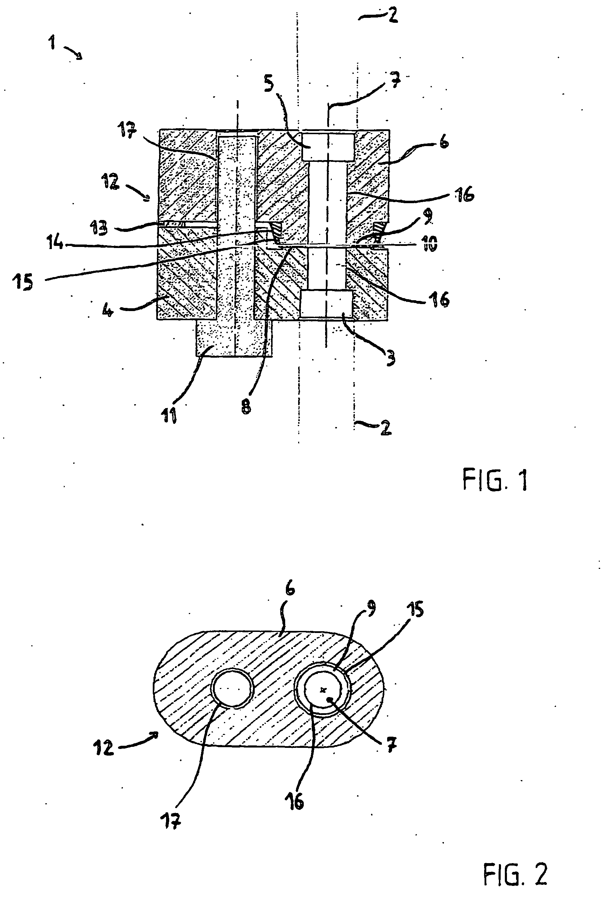

Die in Fig. 1 dargestellte Verbindungsanordnung 1 für Kältemittelleitungen 2 besteht aus einem dicht mit einem ersten Leitungsendstück 3 verbundenen ersten Kupplungsstück 4 und einem dicht mit einem zweiten Leitungsendstück 5 verbundenen zweiten Kupplungsstück 6. Die Verbindung zwischen Kupplungsstück 4, 6 und Leitungsendstück 3, 5 ist unlösbar und stoffschlüssig, wobei das Kupplungsstück 4, 6 eine Bohrung 16 aufweist, in die das Leitungsendstück 3, 5 eingefügt ist. Die Bohrung 16 hat gleichzeitig die Funktion eines Verbindungskanals. Beide Kupplungsstücke 4 und 6 sind durch eine einzige Schraube 11 miteinander verschraubt, wobei eine Bohrung 17 im Kupplungsstück 6 ein Innengewinde aufweist. Durch das Verschrauben sind die Leitungsendstücke 3 über die Bohrung 16 längs einer Achse 7 fluchtend miteinander verbunden. Die beiden Kupplungsstücke 4 und 6 weisen außerdem jeweils auf der zum anderen Kupplungsstück 6 und 4 weisenden Seite eine radial verlaufende Dichtfläche 8 und 9 auf, wobei zwischen den Dichtflächen 8 und 9 ein Dichtring 10 angeordnet ist. Die genannte einzige Schraube 11 ist seitlich von den Dichtflächen 8 und 9 angeordnet.

Zwischen den Kupplungsstücken 4 und 6 ist im Abstand von der Schraube 11 auf der von den Dichtflächen 8 und 9 der Kupplungsstücke 4 und 6 abgewandten Seite 12 ein nicht komprimierbarer Formkörper 13 als Abstandhalter angeordnet ist, der derart ausgebildet ist, dass beim Verschrauben der Kupplungsstücke 4 und 6 eine Hebelwirkung entsteht, die zum gleichmäßigen Zusammenpressen des Dichtringes 10 zwischen den Dichtflächen 8 und 9 der Kupplungsstücke 4 und 6 führt. Der nicht komprimierbare Formkörper 13 ist als stoffschlüssiger Bestandteil des ersten Kupplungsstücks 4 ausgebildet.

Der Dichtring 10 ist in einer hier nicht dargestellten flachen Kunststoffkappe eingelegt, die zwischen den Dichtflächen 8 und 9 angeordnet ist, wobei die Kunststoffkappe und das zweite Kupplungsstück 6 derart ausgebildet sind, dass die Kunststoffkappe noch vor der Verschraubung der Kupplungsstücke 4 und 6 einfach zwischen den Dichtflächen 8 und 9 befestigt werden kann. Hierzu weist das zweite Kupplungsstück 6 im äußeren Bereich der Dichtfläche 9 einen radial umlaufenden nach außen gerichteten Vorsprung 15 auf, auf dem die entsprechend ausgebildete Kunststoffkappe 14 aufgeklipst ist.

Das in Fig. 2 dargestellte Kupplungsstück 4 weist zwei Bohrungen 16, 17 auf. Eine Bohrung 17 ist für die einzige Schraube 11 vorgesehen. Die andere Bohrung 16 ist mit einem Endleitungsstück dicht verbunden und hat die Funktion eines Verbindungskanals.

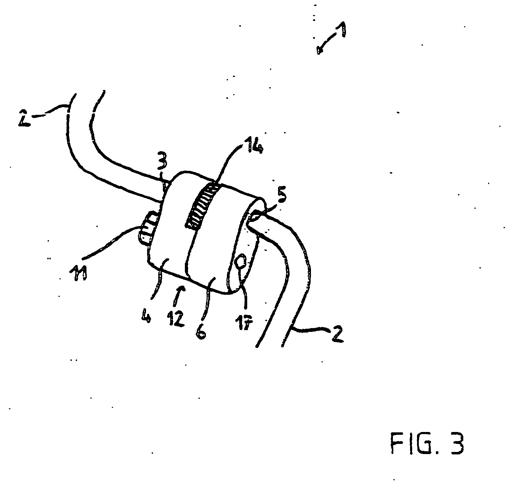

Fig. 3 zeigt eine schematische perspektivische Darstellung der erfindungsgemäßen Verbindungsanordnung 1 für Kältemittelleitungen 2 mit fluchtenden Leitungsendstücken 3 und 5. Die Verbindungsanordnung 1 besteht aus einem dicht mit einem ersten Leitungsendstück 3 verbundenen ersten Kupplungsstück 4 und einem dicht mit einem zweiten Leitungsendstück 5 verbundenen zweiten Kupplungsstück 6, wobei beide Kupplungsstücke 4 und 6 über eine einzige Schraube 11 miteinander verbunden sind. Die einzige Schraube 11 ist seitlich versetzt von den hier nicht erkennbaren Dichtflächen der Kupplungsstücke 4 und 6 angeordnet. Zwischen den hier nicht erkennbaren Dichtflächen der Kupplungsstücke 4 und 6 ist eine Kunststoffkappe 14 angeordnet, in die ein Dichtring eingelegt ist. Zur Fixierung des Dichtringes ist die Kunststoffkappe 14 an dem Kupplungsstück 6 aufgeklipst.

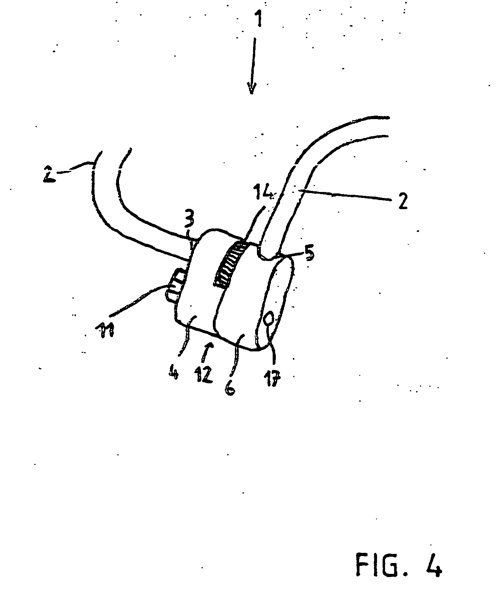

Fig. 4 zeigt eine schematische perspektivische Darstellung der erfindungsgemäßen Verbindungsanordnung 1 für Kältemittelleitungen 2 mit im rechten Winkel zueinander angeordneten Leitungsendstücken 3 und 5. Eine derartige Verbindungsanordnung 1 ist auf engstem Raum positionierbar. Die in Fig. 4 verwendeten Bezugszeichen entsprechen den in Fig. 3 verwendeten Bezugszeichen und bezeichnen daher gleiche Bauteile.

### Bezugszeichenliste

### (ist Bestandteil der Beschreibung)

- 1: Verbindungsanordnung
- 2: Kältemittelleitung
- 3: Leitungsendstück
- 4: Kupplungsstück
- 5: Leitungsendstück
- 6: Kupplungsstück
- 7: Achse
- 8: Dichtfläche
- 9: Dichtfläche
- 10: Dichtring
- 11: Schraube
- 12: Seite
- 13: Formkörper
- 14: Kunststoffkappe
- 15: Vorsprung
- 16: Bohrung
- 17: Bohrung

## Patentansprüche

1. Verbindungsanordnung (1) für Kältemittelleitungen (2), insbesondere für mit CO₂ betriebene Kraftfahrzeugklimaanlagen, aus einem dicht mit einem ersten Leitungsendstück (3) verbindbaren ersten Kupplungsstück (4) und einem dicht mit einem zweiten Leitungsendstück (5) verbindbaren zweiten Kupplungsstück (6), wobei beide Kupplungsstücke (4; 6) durch eine einzige Schraube (11) derart zusammengefügt sind, dass die Leitungsendstücke (3; 5) über je eine Bohrung (16) in den Kupplungsstücken (4; 6) miteinander verbindbar sind, wobei die beiden Kupplungsstücke (4; 6) jeweils auf der zum anderen Kupplungsstück (6; 4) weisenden Seite eine Dichtfläche (8; 9) aufweisen, zwischen denen eine Dichtung angeordnet ist, und wobei zwischen den Kupplungsstücken (4; 6) im Abstand von der Schraube (11) ein Mittel angeordnet ist, das derart ausgebildet ist, dass beim Verschrauben der Kupplungsstücke (4; 6) eine Hebelwirkung entsteht, die zum gleichmäßigem Zusammenpressen der Dichtung zwischen den Dichtflächen (8; 9) der Kupplungsstücke (4; 6) führt, **dadurch gekennzeichnet, dass** die Dichtflächen (8; 9) seitlich versetzt von der Schraube (11) auf der dem Mittel gegenüberliegenden Seite der Schraube (11) angeordnet sind und radial verlaufen, dass die zwischen den Dichtflächen (8; 9) angeordnete Dichtung ein Dichtring (10) ist, dass das zwischen den Kupplungsstücken (4; 6) angeordnete Mittel ein nicht komprimierbarer Formkörper (13) ist, und dass der Dichtring (10) in einer flachen Kunststoffkappe (14) eingelegt ist, die zwischen den Dichtflächen (8; 9) angeordnet ist, wobei die Kunststoffkappe (14) sowie das erste und/oder das zweite Kupplungsstück (4; 6) derart ausgebildet sind, dass die Kunststoffkappe (14) noch vor der Verschraubung der Kupplungsstücke (4; 6) einfach zwischen den Dichtflächen (8; 9) befestigbar, z.B. aufklipsbar, ist.

2. Verbindungsanordnung (1) nach Anspruch 1, **dadurch gekennzeichnet, dass** der nicht komprimierbare Formkörper (13) als stoffschlüssiger Bestandteil des ersten und/oder zweiten Kupplungsstücks (4; 6) ausgebildet ist.

3. Verbindungsanordnung (1) nach Anspruch 1 oder 2, **dadurch gekennzeichnet, dass** der Dichtring (10) ein metallischer Flachring mit umlaufender Sicke ist.

4. Verbindungsanordnung (1) nach Anspruch 1, **dadurch gekennzeichnet, dass** das erste oder das zweite Kupplungsstück (4; 6) im äußeren Bereich der Dichtfläche (8; 9) wenigstens einen radial nach außen gerichteten, vorzugsweise umlaufenden Vorsprung (15) aufweist, auf den die entsprechend ausgebildete Kunststoffkappe (14) lösbar befestigbar, insbesondere aufklipsbar ist.

5. Verbindungsanordnung (1) nach einem der Ansprüche 1 bis 4, **dadurch gekennzeichnet, dass** die Leitungsendstücke (3; 5) im montierten Zustand mit einander fluchten.

6. Verbindungsanordnung (1) nach einem der Ansprüche 1 bis 4, **dadurch gekennzeichnet, dass** die Leitungsendstücke (3; 5) im montierten Zustand im rechten Winkel zueinander angeordnet sind.

## Claims

1. Connecting arrangement (1) for refrigerant lines (2), in particular for motor vehicle air conditioning units operated with CO₂, comprising a first coupling piece (4) which can be sealingly connected to a first line end piece (3), and a second coupling piece (6) which can be sealingly connected to a second line end piece (5), the two coupling pieces (4; 6) being joined together by means of a single screw (11) in such a way that the line end pieces (3; 5) can be connected to one another by means of a bore (16) in each of the coupling pieces (4; 6), the two coupling pieces (4; 6) each having a sealing surface (8; 9) on that side which faces towards the respective other coupling piece (6; 4), between which sealing surfaces (8; 9) a seal is arranged, and a means being arranged between the coupling pieces (4; 6) at a distance from the screw (11), which means is formed such that when the coupling pieces (4; 6) are screwed together, a lever effect is produced which causes uniform compression of the seal between the sealing surfaces (8; 9) of the coupling pieces (4; 6), **characterized in that** the sealing surfaces (8; 9) are arranged so as to be laterally offset with respect to the screw (11) on the opposite side of the screw (11) to the medium and run radially, **in that** the seal which is arranged between the sealing surfaces (8; 9) is a sealing ring (10), **in that** the means arranged between the coupling pieces (4; 6) is a non-compressible moulding (13), and **in that** the sealing ring (10) is inserted in a shallow plastic cap (14) which is arranged between the sealing surfaces (8; 9), the plastic cap (14) and the first and/or the second coupling piece(s) (4; 6) being formed such that the plastic cap (14) can be fastened, for example clipped, between the sealing surfaces (8; 9) in a simple manner before the coupling pieces (4; 6) are screwed together.

2. Connecting arrangement (1) according to Claim 1, **characterized in that** the non-compressible moulding (13) is formed as a cohesively joined component part of the first and/or second coupling piece(s) (4; 6).

3. Connecting arrangement (1) according to Claim 1 or 2, **characterized in that** the sealing ring (10) is a metallic flat ring with a circumferential bead.

4. Connecting arrangement (1) according to Claim 1, **characterized in that** the first or the second coupling piece (4; 6) has at least one radially outwardly aligned and preferentially circumferential projection (15) in the outer region of the sealing surface (8; 9), onto which projection (15) the correspondingly formed plastic cap (14) can be detachably fastened, in particular clipped.

5. Connecting arrangement (1) according to one of Claims 1 to 4, **characterized in that** in the assembled state, the line end pieces (3; 5) are aligned with one another.

6. Connecting arrangement (1) according to one of Claims 1 to 4, **characterized in that** in the assembled state, the line end pieces (3; 5) are arranged at right angles to one another.

## Revendications

1. Dispositif de raccordement (1) pour conduites de réfrigérant (2), notamment pour installations de climatisation de véhicule automobiles fonctionnant avec du CO₂, constitué d'un premier élément d'accouplement (4) pouvant être raccordé hermétiquement à un premier embout de conduite (3) et d'un deuxième élément d'accouplement (6) pouvant être raccordé hermétiquement à un deuxième embout de conduite (5), les deux éléments d'accouplement (4 ; 6) étant assemblés par une vis unique (11) de telle sorte que les embouts de conduite (3 ; 5) puissent être raccordés l'un à l'autre par le biais d'un alésage (16) respectif dans les éléments d'accouplement (4 ; 6), les deux éléments d'accouplement (4 ; 6) présentant, à chaque fois du côté tourné vers l'autre élément d'accouplement (6 ; 4), une surface d'étanchéité (8 ; 9) entre lesquelles est disposé un joint d'étanchéité, et un moyen étant disposé entre les éléments d'accouplement (4 ; 6) à distance de la vis (11), lequel est réalisé de telle sorte que lors du vissage des éléments d'accouplement (4 ; 6), il se produise un effet de levier qui provoque la compression uniforme du joint d'étanchéité entre les surfaces d'étanchéité (8 ; 9) des éléments d'accouplement (4 ; 6), **caractérisé en ce que** les surfaces d'étanchéité (8 ; 9) sont disposées de manière décalée latéralement de la vis (11) du côté de la vis (11) opposé au moyen et s'étendent radialement, **en ce que** le joint d'étanchéité disposé : entre les surfaces d'étanchéité (8 ; 9) est une bague d'étanchéité (10), **en ce que** le moyen disposé entre les éléments d'accouplement (4 ; 6) est un corps moulé non compressible (13) et **en ce que** la bague d'étanchéité (10) est incorporée dans un capuchon plat en plastique (14) qui est disposé entre les surfaces d'étanchéité (8 ; 9), le capuchon en plastique (14) ainsi que le premier et/ou le deuxième élément d'accouplement (4 ; 6) étant réalisés de telle sorte que le capuchon en plastique (14) puisse être fixé, par exemple par enclipsage, simplement entre les surfaces d'étanchéité (8 ; 9) encore avant le vissage des éléments d'accouplement (4 ; 6).

2. Dispositif de raccordement (1) selon la revendication 1, **caractérisé en ce que** le corps moulé non compressible (13) est réalisé sous la forme de constituant lié par matière avec le premier et/ou le deuxième élément d'accouplement (4 ; 6).

3. Dispositif de raccordement (1) selon la revendication 1 ou 2, **caractérisé en ce que** la bague d'étanchéité (10) est une bague plate métallique avec une moulure périphérique.

4. Dispositif de raccordement (1) selon la revendication 1, **caractérisé en ce que** le premier ou le deuxième élément d'accouplement (4 ; 6) présente; dans la région extérieure de la surface d'étanchéité (8 ; 9) au moins une saillie (15) s'étendant radialement vers l'extérieur, de préférence périphérique, sur laquelle le capuchon en plastique (14) réalisé de manière correspondante peut être fixé de manière desserrable, notamment par enclipsage.

5. Dispositif de raccordement (1) selon l'une quelconque des revendications 1 à 4, **caractérisé en ce que** les embouts de conduite (3 ; 5) sont en affleurement l'un avec l'autre dans l'état monté.

6. Dispositif de raccordement (1) selon l'une quelconque des revendications 1 à 4, **caractérisé en ce que** les embouts de conduite (3 ; 5) sont disposés suivant un angle droit l'un par rapport à l'autre dans l'état monté.
